Europäisches Patentamt

European Patent Office

Office européen des brevets

(11) Veröffentlichungsnummer: **0 439 831 A1**

## (12) EUROPÄISCHE PATENTANMELDUNG

(21) Anmeldenummer: 90125437.5

(22) Anmeldetag: 24.12.90

(51) Int. Cl.⁵: **D01G 7/08**, D01G 7/14, B65G 25/02

(30) Priorität: 02.02.90 DE 4003110

(43) Veröffentlichungstag der Anmeldung:
07.08.91 Patentblatt 91/32

(84) Benannte Vertragsstaaten:
**CH DE FR GB IT LI**

(71) Anmelder: **MASCHINENFABRIK RIETER AG**

**CH-8406 Winterthur(CH)**

(72) Erfinder: **Rentsch, Alfred**
**Hauptstrasse 32**
**CH-9214 Kradolf(CH)**
Erfinder: **Hanselmann, Daniel**
**Kernstrasse 17**
**CH-8406 Winterthur(CH)**
Erfinder: **Faas, Jürg**
**Seuzacherstrasse 16**
**CH-8474 Dinhard(CH)**

(54) **Transportvorrichtung zur schrittweisen Verschiebung von Faserballen.**

(57) Eine Transportvorrichtung (100) zur schrittweisen Verschiebung von Faserballen, insbesondere in Richtung einer vorzugsweise geneigt angeordneten und quer zur Verschieberichtung (106) bewegbaren Fräswalze (1) einer Ballenabtragmaschine zeichnet sich dadurch aus, daß die Transporteinrichtung aus mindestens einem der Abstützung des Faserballens dienenden, stationären Abstützelement (102) sowie mindestens einer Verschiebeeinrichtung (104, 116, 118; 104, 192, 140; 204, 244, 144, 256) besteht, und daß die Verschiebeeinrichtung zum Ausführen eines sich wiederholenden Bewegungszyklus von einer Ausgangslage weg und in diese zurück ausgelegt ist, wobei die Ausgangslage tiefer oder zumindest in etwa gleich hoch liegt wie die Abstützfläche des Abstützelements (102) und der Bewegungszyklus einen ersten nach oben und nach vorne gerichteten Abschnitt und einen zweiten nach unten und nach hinten gerichteten Abschnitt aufweist.

Fig.7

# TRANSPORTVORRICHTUNG ZUR SCHRITTWEISEN VERSCHIEBUNG VON FASERBALLEN

Die vorliegende Erfindung bezieht sich auf eine Transportvorrichtung zur schrittweisen Verschiebung von Faserballen, insbesondere in Richtung einer vorzugsweise geneigt angeordneten, und sich quer zur Verschieberichtung bewegbaren Fräswalze einer Ballenabtragmaschine.

Eine Transportvorrichtung dieser Art ist beispielsweise in unserer früheren schweizerischen Patentanmeldung CH 00834/89-7 beschrieben. Bei der in dieser schweizerischen Anmeldung vorgeschlagenen Ballenabtragmaschine werden die Ballen schrittweise nach vorne geschoben und mit einer zur Vorschubrichtung geneigten und quer zur Vorschubrichtung fahrbaren Fräswalze abgetragen. Dabei sind verschiedene Anordnungen möglich, beispielsweise mit mehreren Ballenreihen neben- und/oder übereinander, wobei auch mehrere geneigt angeordnete Fräswalzen benutzt werden können.

Das Schrägabtragen der Faserballen hat den besonderen Vorteil, daß das Material gleichzeitig von allen Bereichen der Ballen abgetragen wird, so daß sich eine zumindest im wesentlichen konstante Abtragmenge pro Zeiteinheit ergibt, welche weitestgehend unabhängig von der jeweiligen Dichteverteilung innerhalb der Faserballen ist. Somit kann die Abtragtiefe bei jeder erneuten Abtragbewegung der Fräswalze quer zur Ballenreihe konstant gehalten werden und zwar je nach dem, welche Flockenmenge pro Zeiteinheit abgetragen werden soll. Diese Abtragtiefe wird gemäß diesem älteren Vorschlag dadurch vorgegeben, daß die Ballenreihe jeweils um einen vorbestimmten Schritt vorgeschoben wird.

Die Transportvorrichtung, welche diese schrittweise Verschiebung der Faserballen gemäß dem älteren Vorschlag bewirkt, ist als umlaufendes Förderband dargestellt. Obwohl eine derartige Konstruktion durchaus möglich ist, führt sie in der Praxis zu einem relativ hohen Aufwand, da die zu verschiebenden Faserballen relativ schwer sind und eine Verschiebung der Ballenreihe entgegen der Vorschubrichtung, beispielsweise aufgrund der von der Fräswalze auf den vorderen Ballen während des Abtragens ausgeübten Kräfte vermieden werden muß.

Aufgabe der vorliegenden Erfindung ist es, eine Transportvorrichtung der eingangs genannten Art zu schaffen, welche bei relativ geringem Herstellungsaufwand stabil und im Betrieb zuverlässig ausgebildet werden kann, wobei insbesondere die Schrittlänge der schrittweisen Verschiebung entweder fest eingestellt oder variabel gemacht werden kann, ohne daß dies zu einer wesentlichen Verteuerung der Anlage führt, wobei die Gefahr des Zurückschiebens der Ballen, aufgrund der während des Abtragens herrschende Kräfte weitestgehend vermieden ist. Auch zielt die vorliegende Erfindung darauf, eine Transportvorrichtung in modularer Bauweise zu schaffen, mit Moduln, die je nach Größe und Auslegung der Ballenabtragmaschine in mehreren Reihen und Längen neben- bzw. hintereinander aufgestellt werden können.

Zur Lösung dieser Aufgabe wird erfindungsgemäß vorgesehen, daß die Transporteinrichtung aus mindestens einem der Abstützung des Faserballens dienenden, stationären Abstützelement, sowie mindestens einer Verschiebeeinrichtung besteht, und daß die Verschiebeeinrichtung zum Ausführen eines sich wiederholenden Bewegungszyklus von einer Ausgangslage weg und in diese zurück ausgelegt ist, wobei die Ausgangslage tiefer oder zumindest in etwa gleich hoch liegt wie die Abstützfläche des Abstützelements, und der Bewegungszyklus einen ersten nach oben und nach vorne gerichteten Abschnitt und einen zweiten nach unten und nach hinten gerichteten Abschnitt aufweist.

Dadurch, daß die Ballen zwischen den einzelnen Schritten auf dem stationären Abstützelement stehen, sind sie ausreichend gegen eine Verschiebung von der Fräzwalze weg gesichert. Auch läßt sich die Verschiebeeinrichtung aus relativ wenigen Elementen zusammensetzen, und zwar ohne daß man massive und schwer ausgelegte Drehachsen und Rollen benötigt, so wie dies bei einem umlaufenden Förderband eher der Fall ist. Wenn längere Verschiebewege erforderlich sind, beispielsweise beim Heranfahren von neuen Ballen nach einem Sortimentswechsel, so können solche längere Verschiebewege durch mehrere nacheinanderanderfolgenden Schritte ohne weiteres bewältigt werden. Dadurch, daß die einzelnen Schritte erfindungsgemäß relativ klein gestaltet werden, beispielsweise im Bereich zwischen 1 mm und 50 mm, ist es möglich, mit einer Betätigungseinrichtung zu arbeiten, deren einzelne Hübe auch begrenzt sind, so daß auch hier der erforderliche Aufwand begrenzt bleibt.

Ein Rücktransport des Ballens läßt sich auch bei der erfindungsgemäßen Transportvorrichtung erreichen, und zwar dadurch, daß der Bewegungszyklus umkehrbar ist.

Obwohl im Prinzip mit einem einzigen Abstützelement gearbeitet werden kann, wobei beispielsweise dann zwei Verschiebeeinrichtungen an beiden Seiten des Abstützelementes vorzusehen wären, bevorzugt man in der praktischen Ausführung eine Vorrichtung mit einer Mehrzahl von Abstützelementen, welche parallel zueinander mit Abstand voneinander angeordnet sind und einen Rost bilden. Ein derartiger Rost kann kostengünstig aus länglichen Profilen aufgebaut werden, ist aber dennoch ausreichend stabil, um das Gewicht der Faserballen zu tragen. Durch die Abstände zwischen den einzelnen Trägern wird zudem eine Gewichts- und damit auch eine Materialersparnis erreicht. Weiterhin wird, insbesondere bei einer Ausrichtung der länglichen Profile parallel zur Verschieberichtung eine Verschiebeführung der Faserballen erreicht, da die Profilelemente etwas in die Flockenmasse der Ballen hineindrängen und somit eine Art Führungsnuten im Faserballen selbst bilden.

Die Verschiebeeinrichtung weist vorzugsweise einen Träger auf, welcher die Faserballen wenigstens während eines Teils des ersten Abschnittes trägt, d.h. wenigstens während des nach vorne gerichteten Abschnittes der schrittweisen Verschiebebewegung. Zu diesem Zweck besteht der Träger vorzugsweise aus einem zweiten Rost, dessen Stäbe zwischen den Abstützelementen des ersten Rostes angeordnet sind.

Es besteht die Möglichkeit, die Verschiebeeinrichtung mit mindestens einer Hebeeinrichtung und besser zwei oder mehreren synchronisierten Hebeeinrichtungen auszustatten, welche wenigstens zum Anheben und Absenken des Trägers bzw. des zweiten Rostes dient bzw. dienen. Beispielsweise können vier solche Hebeeinrichtungen unterhalb der Faserballen an den Ecken eines Rechtecks angeordnet werden, welches in Draufsicht flächenmäßig etwas kleiner ist als der rechteckige Umriß des Faserballens. Hierdurch kann die Stabilität des zweiten Rosten gegen Durchbiegen bei vernünftigen Abmessungen des Trägers sichergestellt werden.

Die Verschiebeeinrichtung kann einen von der Hebeeinrichtung bzw. den Hebeeinrichtungen unabhängig arbeitenden Verschiebemechanismus umfassen. Hierdurch wird eine klare Trennung zwischen den Anheb- und Absenkbewegungen einerseits und den Vorschub- bzw. Rückholbewegungen andererseits erreicht, was zu kostengünstigen Lösungen führt. Beispielsweise kann die bzw. jede Hebeeinrichtung aus einem aufblasbaren Balg bestehen, wobei dieser auf einem rollbar angeordneten Wagen angeordnet sein und den Träger abstützen kann und der Verschiebemechanismus entweder am Wagen oder am Träger bzw. am zweiten Rost angreift. Ein aufblasbarer Balg stellt eine preisgünstige Lösung für eine Hebeeinrichtung dar, welche zudem durch Auswahl einer ausreichend großer Hebefläche mit relativ geringen Überdrücken betrieben werden kann. In einem solchen Fall kann der Verschiebemechanismus ein ausfahrbarer und rückziehbarer Luftzylinder sein oder er kann eine antreibbare, vorzugsweise elektrisch antreibbare Gewindespindel und eine Kugelmutter umfassen, welche preisgünstige Verschiebemechanismen darstellen. Nachdem solche Verschiebemechanismen üblicherweise für längere Verschiebungen ausgelegt sind, kann es von Vorteil sein, diese über ein Untersetzungsgetriebe am Wagen oder am zweiten Rost angreifen zu lassen, wodurch die vom Verschiebemechanismus selbst auszuübenden Vorschubkräfte relativ gering gehalten werden können, wodurch sie relativ klein und daher preisgünstig ausgeführt werden können. Nachdem die erforderlich Tragkraft für die Faserballen von dem rollbar angeordneten Wagen getragen ist, sind die von den Verschiebemechanismen auszuübenden Vorschubkräfte relativ klein, so daß auch hierdurch eine kompakte und preisgünstige Ausbildung der Verschiebemechanismen ermöglicht wird.

Es ist aber auch möglich, eine preisgünstige Lösung zu erreichen bei einer Transportvorrichtung, welche sich dadurch auszeichnet, daß die bzw. jede Verschiebeeinrichtung aus einer Hebeeinrichtung mit integriertem Verschiebemechanismus besteht.

Beispielsweise kann die bzw. jede Verschiebeeinrichtung aus einem verschiebbaren Keil bestehen, wobei die Keilwirkung für das Anheben bzw. Absenken des Trägers sorgt und die Längsverschiebung des Keils zur Durchführung der Verschiebebewegung der Faserballen ausgenützt wird. In einem konkreten Fall kann dies dadurch erreicht werden, daß der Keil mit einer in einer Halterung in senkrechter Richtung geführten Rolle zusammenarbeitet, welche einen die Ballen anhebenden Träger bzw. den zweiten Rost anhebt, daß die Halterung um eine zumindest im wesentlichen waagerechte und quer zur Verschieberichtung stehende Achse kippbar angeordnet ist, und daß eine erst am oberen Ende der Hebebewegung lösbare Verriegelung die Halterung zur Ausführung einer den Träger bzw. den zweiten Rost in Verschieberichtung bewegende Kippbewegung freigibt.

Diese Anordnung läßt sich in der Praxis mit relativ wenigen Teilen ausbilden und arbeitet in der Praxis sehr zuverlässig. Besonders günstig ist es, die Anordnung so auszulegen, daß die nach unten gerichtete Gewichtskraft der Faserballen infolge der Neigung der Keilfläche eine Komponente in der Vorschubrichtung hat, die ein Drehmoment um die Kippachse ergibt, wodurch die Kippbewegung allein durch das Gewicht des Faserballens bewirkt wird, und zwar absichtlich durch einen kleinen Potentialenergieverlust. Die erforderliche Energie für diese Kippbewegung ist jedoch relativ gering, so daß die zugeordnete Absenkbewegung des Faserballens vernachlässigbar klein ist und daher keine störenden Auswirkungen hat.

Der Keil ist bei dieser Ausführung vorzugsweise als Doppelkeil mit entgegengesetzt geneigten Keilflächen ausgebildet, wobei die eine Keilfläche für eine Verschiebung in die Verschieberichtung und die andere Keilfläche für eine Verschiebung in der entgegengesetzten Richtung sorgt. Die entgegengesetzt geneigten Keilflächen sind vorzugsweise V-förmig zueinander geneigt, so daß das "Umschalten" von Schritten in die Vorschubrichtung in Schritte in die entgegengesetzte Richtung dann erfolgt, wenn das Gewicht der Faserballen nicht auf dem Träger ruht, da die Spitze der V-förmigen Vertiefung, welche die Umschaltstelle darstellt, einer abgesenkten Lage des Trägers entspricht, d.h. einer Lage, bei der das Gewicht des Ballens vom Abstützelement, d.h. vom ersten Rost, getragen ist.

Erfindungsgemäß kann ein Anschlag oder können mehrere Anschläge vorgesehen sein, um die Kippbewegung der Halterung zu begrenzen und hierdurch auch die Schrittlänge der Verschiebeeinrichtung. Es ist auch durchaus praktikabel, den Anschlag bzw. wenigstens einen Anschlag verstellbar zu gestalten, so daß die Schrittlänge ebenfalls verstellbar ist.

Eine Rückstelleinrichtung ist vorzugsweise vorgesehen, um die Halterung mit dem Träger bzw. dem zweiten Rost nach einer erfolgten Kippbewegung und nach Absenkung des Trägers bzw. des Rostes in die verriegelte Stellung zurücksetzt. Diese Rückstelleinrichtung kann aus einer Feder oder mehreren Federn bestehen. Dadurch daß die Rückstellung nach Absenkung des Trägers erfolgt, kann die Rückstellkraft mit einer relativ kleinen Feder bewältigt werden.

Besonders bevorzugte praktische Weiterbildungen dieser Ausführungen mit verschiebbarem Keil sind den Unteransprüchen 20 bis 27 zu entnehmen.

Eine weitere Ausführungsvariante zeichnet sich dadurch aus, daß die bzw. jede Hebeeinrichtung aus einem Scherengelenk mit zwei über ein gemeinsames Gelenk aneinander angelenkten Schenkeln besteht, daß der erste Schenkel an seinem dem gemeinsamen Gelenk entgegengesetzten Ende an einem bezüglich des Abstützelementes fest angeordneten Anlenkpunkt angelenkt ist, daß der zweite Schenkel an seinem dem gemeinsamen Gelenk entgegengesetzten Ende an einem dem Träger bzw. dem zweiten Rost zugeordneten Anlenkpunkt angelenkt ist, und daß eine Betätigungseinrichtung vorgesehen ist, welche an dem gemeinsamen Gelenk angreift und hierdurch eine Hebebzw. Absenkbewegung des Trägers bzw. des Rostes durch Verschiebung des gemeinsamen Gelenkes bewirkt.

Das Scherengelenk kann als Kniehebelgelenk ausgebildet sein, so daß es nach der erfolgten Anhebung des Trägers eine stabile gestreckte Lage einnimmt. Durch Vorsehen einer Führung, welche den Träger bzw. den zweiten Rost oder dessen Anlenkpunkt am zweiten Schenkel des Scherengelenks wenigstens im oberen Bereich der Hebebewegung unter der Einwirkung der auf das Scherengelenk einwirkenden Kräfte bzw. der Schwerkraft führt, wird eine Bewegung des Trägers bzw. des Rostes in die Verschieberichtung bewirkt.

Die bisher erwähnten Ausführungen der Transportvorrichtung können alle in Draufsicht von rechteckiger Gestalt sein, so daß mehrere gleichartige Transportvorrichtungen in Reihe neben- und/oder hintereinander zur Bildung der Ballenzuführeinrichtung einer Ballenabtragmaschine angeordnet sein können. Hierdurch wird der Wunsch nach einer modularen Transportvorrichtung erfüllt.

Es ist auch möglich, nur die erste Transportvorrichtung von jeder Reihe zu einem Rücktransport des auf diesen stehenden Ballens auszulegen, da der Rücktransport der Faserballen im praktischen Betrieb nur dann erwünscht ist, wenn die Fräswalze an einer bestimmten Ballenreihe vorbeifahren soll, ohne von dieser Reihe etwas abzutragen. Durch die Rückbewegung des vorderen Ballens wird verhindert, daß die Fräswalze herausstehende Flocken dennoch abträgt.

Die Erfindung wird nachfolgend näher erläutert, anhand von Ausführungsbeispielen unter Bezugnahme auf die Zeichnung, in welcher zeigen:

Fig. 1     eine schematische Seitenansicht einer Ballenabtragmaschine zur schrägen Abtragung, so wie sie in Fig. 14 der oben genannten schweiz. Patentanmeldung CH 00834/89-7 gezeigt ist,

Fig. 2     eine Draufsicht in Pfeilrichtung II der Ballenabtragmaschine gemäß Fig. 1,

Fig. 3     einen Teil der Vorrichtung der Fig. 1 in Blickrichtung III der Fig. 1 gesehen,

Fig. 4     einen Querschnitt durch die Vorrichtung von Fig. 1, gemäß der Schnittebene VI-IV,

Fig. 5     einen Teil der Vorrichtung der Fig. 1 in Blickrichtung V der Fig. 1 gesehen,

Fig. 6     eine Seitenansicht einer ersten Ausführung einer Transportvorrichtung gemäß vorliegender Erfindung,

Fig. 7     eine Draufsicht auf die Transportvorrichtung der Fig. 6 in Pfeilrichtung VII,

Fig. 8     eine Stirnansicht in Pfeilrichtung VII der Transportvorrichtung der Fig. 6,

Fig. 9     eine vergrößerte Darstellung einer der Hebeeinrichtungen der Fig. 7, so wie in Pfeilrichtung IX gesehen, und zwar in der abgesenkten Lage dieser Hebeeinrichtung,

Fig. 10    die gleiche Ansicht wie Fig. 9, jedoch in der angehobenen Lage der Hebeeinrichtung,

Fig. 11 eine Seitenansicht einer weiteren Ausführungsform einer Verschiebeeinrichtung,

Fig. 12 eine Draufsicht in Pfeilrichtung XII der Fig. 11,

Fig. 13 einen Querschnitt durch die Anordnung gemäß Fig. 11 in der Schnittebene XIII-XIII,

Fig. 14 eine Seitenansicht einer weiteren Ausführungsvariante einer Hebeeinrichtung zur Anwendung mit einer erfindungsgemäßen Transportvorrichtung und

Fig. 15 eine Ansicht in Pfeilrichtung XV der Ausführung gemäß Fig. 14.

Fig. 16 eine schematische Draufsicht auf mehrere nebeneinander angeordnete Transportvorrichtungen.

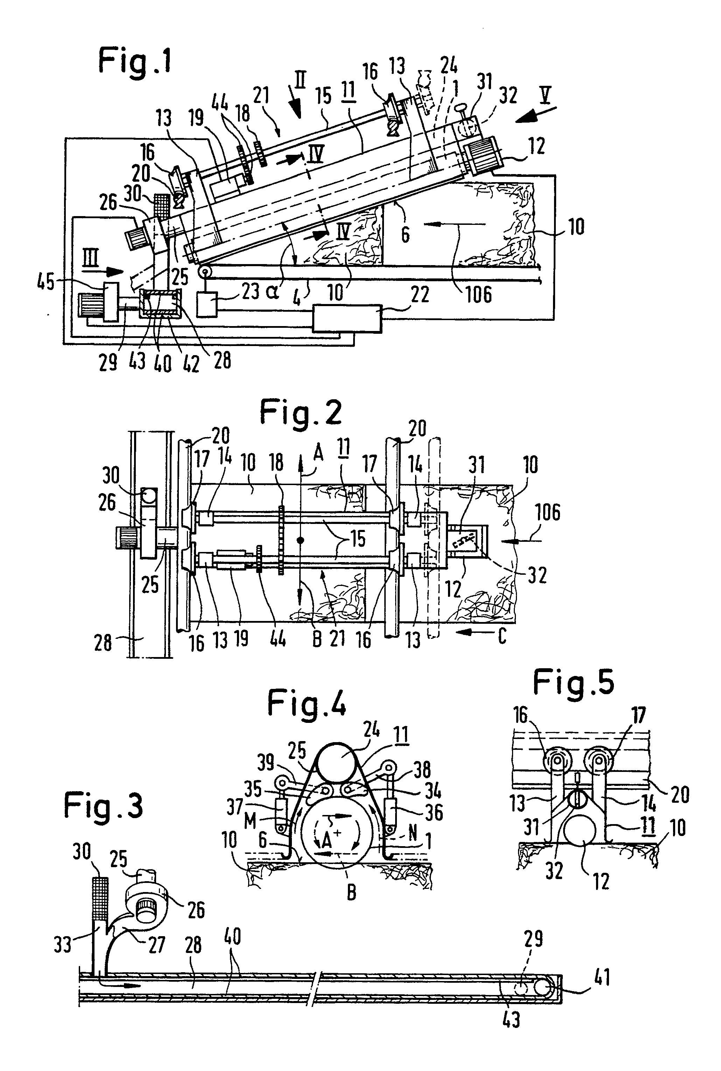

Die Fig. 1 zeigt eine Vorrichtung, in welcher eine Zahnwalze 1, welche die Fräswalze darstellt, in einem Gehäuse 11 dreh- und antreibbar gelagert ist, wobei die Fräswalze 1 durch einen Elektromotor 12, welcher fest mit dem Gehäuse 11 verbunden ist, angetrieben wird.

Weiterhin weist das Gehäuse 11 zwei Trägerpaare 13 und 14, welche je eine Radwelle 15 drehbar und gegen axiales Verschieben abgesichert gelagert ist.

Profilräder 16 bzw. 17 sind fest mit den Wellen 15 verbunden, welche aus dem je auf einer rohrförmigen Führungsschiene 20 für das Bewegen des Gehäuses 11 in den Bewegungsrichtungen A und B geführt sind. Eine der Wellen 15 wird von einem Motor 19 mittels Zahnrädern 44 angetrieben, während die andere Welle 15 durch einen Übertrieb 18 angetrieben wird. Dabei ist der Motor 19 fest mit dem Gehäuse 11 verbunden. Das Ganze wird als Abtragorgan 21 bezeichnet.

Eine Steuerung 22 steuert die Motoren 12, 19 und 23, wobei letztere dem Antrieb eines die Faserballen 10 in Richtung auf die Fräswalze zum Vorschieben des Förderbandes 4 dient.

Im weiteren weist das Gehäuse 11 oberhalb der Zahnwalze 1 einen Flockenförderkanal 24 (siehe auch Fig. 4) auf, dessen Ausgang 25 einem Ventilator 26 angeschlossen ist.

Der Ventilator 26 ist, wie aus den Figuren ersichtlich, als Radialventilator ausgebildet und führt den Ausgang in einen Bogen 27, welcher die transportierten Faserflocken einem pneumatischen Förderkanal 28 übergibt.

Dieser Förderkanal 28 ist seinerseits über eine Leitung 29 an einen Ventilator 45 angeschlossen, welcher die Faserflocken in die nächste Verarbeitungsstelle (nicht gezeigt) fördert.

Der Ausgleich zwischen dem Ventilator 26 und dem der Leitung 29 nachgeschalteten Ventilator 45 wird durch den Ausgleichsfilter 30 erreicht.

Zur Steuerung der Durchsatzluftmenge durch den Faserförderkanal 24 ist an seinem Eintrittsende 31 eine Drosselklappe 32 vorgesehen.

Der Ausgleichsfilter 30 ist seinerseits an einem Filterstutzen 33 befestigt, welcher an den Bogen 27 angeschlossen ist, um dadurch eine Verbindung zwischen dem Innenraum des Bogens 27 und dem Ausgleichsfilter 30 herzustellen.

Als Variante kann auch auf den Ventilator 26 verzichtet werden, so daß die Faserflocken mittels dem durch den Ventilator 45 erzeugten Luftstrom transportiert werden. Ein möglicher Nachteil dieser Varianten besteht darin, daß ein unter Umständen nachteilig höherer Unterdruck im Kanal 28 herrscht. Hingegen weist diese Variante den sicheren Vorteil der einfacheren und billigeren Ausführung auf, da nebst dem Ventilator 26 auch noch der Filter 30 wegfällt.

Aus Fig. 4 ist ersichtlich, daß im Gehäuse 11, zwischen der Zahnwalze 1 und dem Flockenförderkanal 24, Klappen 34, resp. 35, vorgesehen, die wahlweise und abhängig von der Drehrichtung der Zahnwalze 1 die Förderluft samt Faserflocken, entweder in der Förderrichtung M oder N, in den Flockenförderkanal 24 durchlassen.

Am Beispiel von Fig. 4 ist ersichtlich, daß für die Drehrichtung der Zahnwalze 1 im Uhrzeigersinn und in Bewegungsrichtung des Abtragorganes 21 in Richtung A, die Förderluft samt Förderflocken den Weg M nehmen. Umgekehrt werden die Faserflocken durch den Weg N geleitet, wenn die Zahnwalze in Gegenuhrzeigerrichtung dreht und das Abtragorgan in Bewegungsrichtung B Flocken aus der Abtragfläche 6 abträgt.

Zur Betätigung der Klappe 34 ist ein Pneumatikzylinder 36 und für die Klappe 35 ein Pneumatikzylinder 37 vorgesehen, welche je einerseits mit dem Gehäuse 11 schwenkbar und andererseits mit einem Schwenkhebel 38, resp. 39, schwenkbar verbunden sind. Dabei sind die Schwenkhebel 38 und 39 je mit der entsprechenden Klappe 34, resp. 35, drehfest verbunden.

Der Förderkanal 28 weist, um den in den Bewegungsrichtungen A und B hin- und herbewegten Bogen 27 aufzunehmen ein endloses Band 40 auf, welches an beiden Enden des Förderkanales 28 um eine Umlenkwalze 41 (in Fig. 3 nur eine ersichtlich) umgelenkt wird.

Innerhalb der beiden Umlenkwalzen ist die Verbindungsleitung 29 (Fig. 1 und 3) an den Förderkanal 28 angeschlossen.

Wie aus Fig. 1 ersichtlich, setzt sich der Förderkanal 28 aus einem U-förmigen Trog 42 und dem sich darin bewegten endlosen Band 40 zusammen.

Um zu verhindern, daß das endlose Band 40 von dem im Kanal 28 herrschenden Unterdruck nach innen gesaugt wird, ist das Band 40 durch Gleitschienen 43 abgestützt.

In Betrieb wird das Abtragorgan 21 durch die Steuerung 22 veranlaßt, die Hin- und Herbewegungen A und B durchzuführen, wobei gleichzeitig die Faserballen in der Bewegungsrichtung C um einen Schrittweg, beispielsweise 2 bis 5 mm, gegen das Abtragorgan geführt werden, so daß die Zahnwalze 1 in der Lage ist, Flocken aus der Abtragfläche 6 herauszulösen und dem Förderkanal 24 zu übergeben.

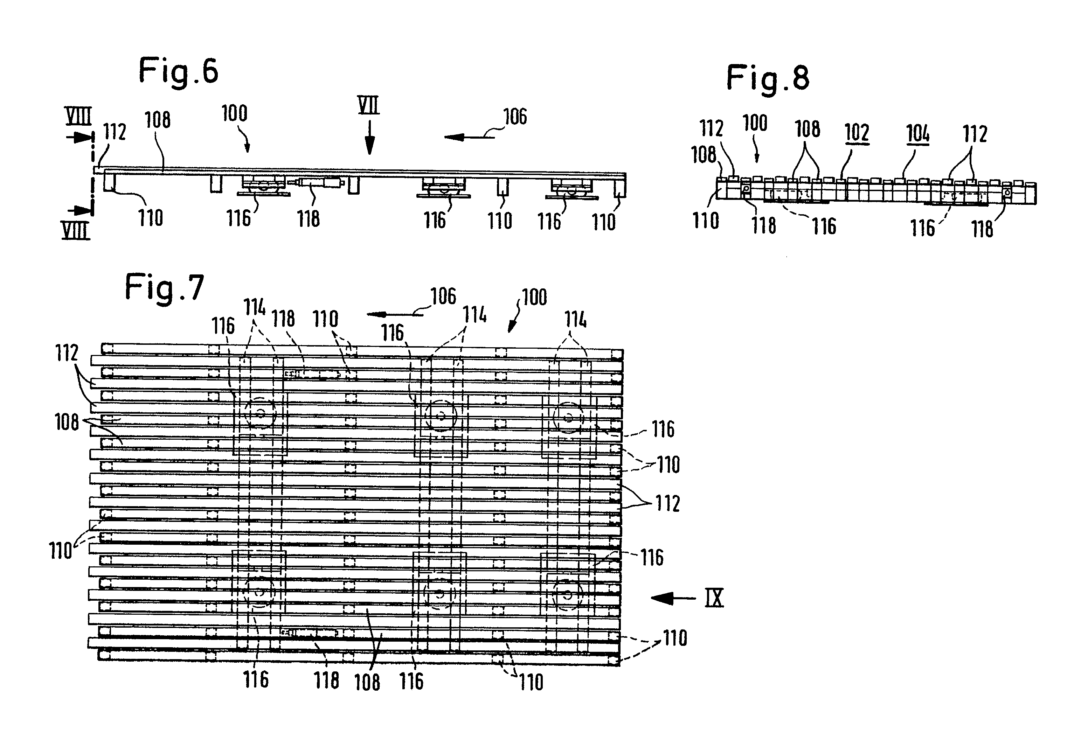

Die vorliegende Erfindung befaßt sich mit einer besonderen Art von Transportvorrichtungen, die anstelle des umlaufenden Faserbands 4 der bisherigen Figuren zu verwenden ist. Eine erste Ausführungsform der erfindungsgemäßen Transportvorrichtung ist in den Fig. 6 bis 10 gezeigt.

Hier besteht die Transportvorrichtung 100, welche einen rechteckigen Umriß aufweist (Fig. 7) aus einem ersten Rost 102 und einem zweiten Rost 104. Der erste Rost 102 besteht aus einer Vielzahl von parallel zueinander in der Verschieberichtung 106 angeordneten Stäben 108, welche über kurze Rohrstücke 110 am Boden befestigt sind. Wie aus Fig. 6 ersichtlich, sind in diesem Beispiel fünf solche Rohrstücke 110 für jeden Längsstab 108 des ersten Rostes 102 vorgesehen. Der zweite Rost 104 besteht ebenfalls aus sich in Verschieberichtung 106 erstreckenden, parallel zueinander mit Abstand angeordneten Stäben 112, welche eine Querabmessung aufweisen, die geringer ist als der lichte Abstand zwischen zwei benachbarten Längsstäben 108 des ersten Rostes, die wiederum eine Querabmessung aufweisen, die geringer ist als der lichte Abstand zwischen benachbarten Stäben 112 des zweiten Rostes 104. Hierdurch wird die ineinandergreifende Anordnung, die aus Fig. 7 und 8 leicht ersichtlich ist, ermöglicht, wobei der zweite Rost 104 sich in der senkrechten Richtung und in der Verschieberichtung 106 gegenüber dem stationären ersten Rost 102 bewegen kann, wie nachher näher erläutert wird. Um die Längsstäbe 112 des zweiten Rostes miteinander zu verbinden und hierdurch einen Träger zu bilden, sind unterhalb der Längsstäbe 112 insgesamt sechs Querbalken 114 vorgesehen, welche paarweise unterhalb der Stäbe 112 angeordnet sind und diese dienen außerdem dazu die Hebekraft von sechs über die Fläche der Transportvorrichtung verteilten Hebeeinrichtungen 116 auf die Stäbe 112 zu übertragen. Wie ersichtlich, sind für jedes Paar Querbalken 114 zwei voneinander beabstandete Hebeeinrichtungen 116 vorgesehen. Insgesamt sind die Hebeeinrichtungen 116, wie aus Fig. 7 ersichtlich, so über die Fläche des zweiten Rostes verteilt, daß insgesamt eine vernünftige Verteilung der Hebekräfte über die Fläche des zweiten Rostes 104 erreicht wird, ohne daß einzelne Teile des zweiten Rostes unter den aufgebrachten Kräften eine nennenswerte Durchbiegung erfahren.

Zur Verschiebung des zweiten Rostes in der Verschieberichtung 106, bzw. beim Rücktransport der Faserballen in der umgekehrten Richtung sind zwei Luftzylinder 118 vorgesehen, welche in den Fig. 6, 7 und 8 gezeigt sind und an dem hinteren Balken des vorderen Querbalkenpaares 114 angreifen. Das hintere Ende der Luftzylinder 118 ist am stationären ersten Rost 102 bzw. am Boden fest verankert. Die Hebeeinrichtung 116 und der durch die Luftzylinder 118 gebildete Verschiebemechanismus bilden zusammen eine Verschiebeeinrichtung, welche für eine schrittweise Verschiebung des bzw. der sich auf der Transportvorrichtung befindlichen Faserballens bzw. Faserballen dient, wobei diese Verschiebung entweder in der Verschieberichtung 106 oder bei einem Rücktransport der Faserballen in der umgekehrten Richtung erfolgen kann. Ist eine Verschiebung in der Pfeilrichtung 106 erwünscht, so wird die Hebeeinrichtung 116 zunächst betätigt, um den zweiten Rost 104 von einer unterhalb der Abstützfläche des ersten Rostes 102 befindlichen Lage in eine gehobene Lage gemäß Fig. 8 zu heben, und es werden dann die Luftzylinder 118 ausgefahren, um die notwendige Vorschubbewegung des zweiten Rostes 104 gegenüber dem ersten stationären Rost 102 zu bewirken. Nach Durchführung dieses Schrittes wird die Hebeeinrichtung 116 entlastet und der zweite Rost 104 sinkt dann unter die Abstützfläche des ersten Rostes 102, so daß das Gewicht der Faserballen nunmehr zumindest im wesentlichen ausschließlich durch den ersten Rost 102 getragen wird. Anschließend werden die Luftzylinder 118 wieder eingezogen und der zweite Rost bewegt sich in die Ausgangslage zurück. Der Faserballen, der sich auf dem ersten Rost befindet, ist jedoch um einen Vorschubschritt weiter vorne angeordnet als vor dem soeben beschriebenen Bewegungszyklus. Es ist einleuchtend, daß weitere Vorschubschritte möglich sind, durch Wiederholung des Vorschubzyklus. Sollte man einen Rücktransport der Faserballen wünschen, so wird der Zyklus in der umgekehrten Reihenfolge durchgeführt, d.h. die Luftzylinder 118 werden zunächst ausgefahren, die Hebeeinrichtungen 116 heben dann den zweiten Rost 104 an, die Luftzylinder 118 werden eingezogen und die Hebeeinrichtung 116 betätigt, um eine Absenkung des zweiten Rostes unterhalb der Abstützfläche des ersten Rostes zu erreichen, wodurch die Verschiebeeinrichtung und der zweite Rost in die Ausgangslage zurückgefahren werden, der auf der Transportvorrichtung liegende Faserballen jedoch nunmehr einen Schritt rückwärts bewegt worden ist. Auch dieser Rücktransportzyklus läßt sich wahlweise mehrfach wiederholen, um längere Verschiebewege der Faserballen zu erreichen.

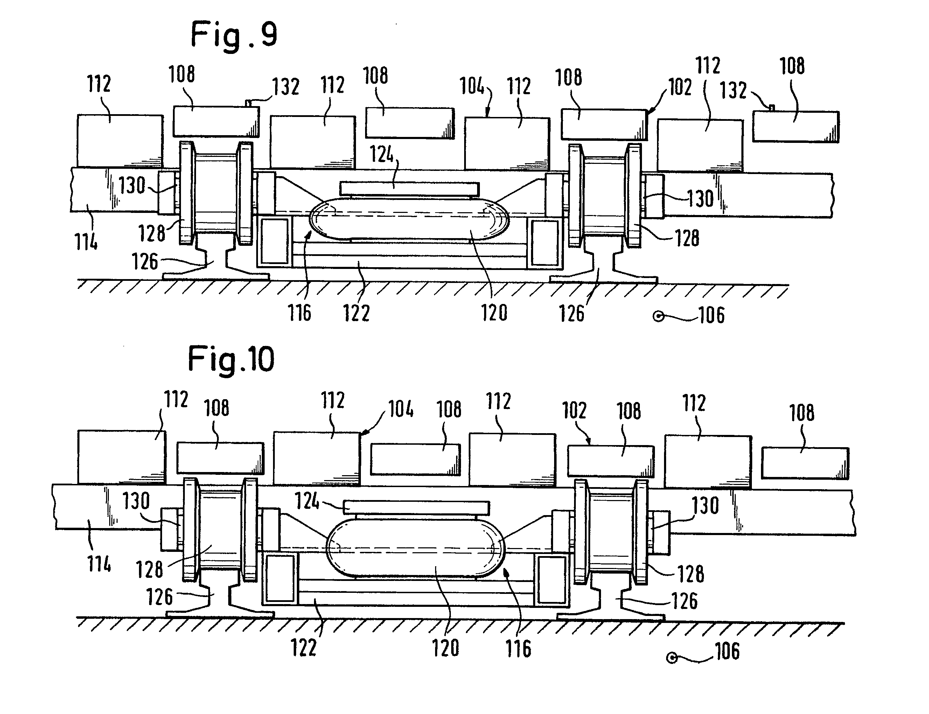

Fig. 9 und 10 zeigen die detaillierte Ausbildung der Transportvorrichtung im Bereich der Hebeeinrichtung 116 im weiteren Detail. Wie aus den Fig. 9 und 10 ersichtlich, besteht die Hebeeinrichtung 116 aus einem Luftkissen bzw. -balg 120, welches/welcher über eine nicht gezeigte Leitung von einer Druckgasquelle gefüllt bzw. entleert werden kann. Der aufblasbare Balg 120 hat somit eine entleerte oder teilentleerte Stellung, so wie in Fig. 9 gezeigt, und eine gefüllte Stellung, so wie in Fig. 10 gezeigt. Die untere Seite des Luftbalges 120 ist an einem rollbar angeordneten Wagen 122 befestigt. An seiner oberen Seite drückt er gegen die Unterseite einer Platte 124, welche zwischen dem jeweils zugeordneten Paar von Querbalken 114 angebracht z.B. angeschweißt ist. Somit führt das Aufblasen des Luftbalges 120 zu einer Anhebung des zweiten Rostes 104, so daß dieser die angehobene Stellung gemäß Fig. 10 annimmt.

Unterhalb der Transportvorrichtung befinden sich zwei sich in der Verschieberichtung 106 erstreckende Schienen 126, welche auf beiden Seiten des Wagens 122 der gezeigten Hebeeinrichtung 116 angeordnet und am Boden befestigt sind. Entsprechende Schienen bzw. Schienenabschnitte befinden sich ebenfalls auf beiden Seiten der weiteren Hebeeinrichtungen 116. Der Wagen 122 trägt an jeder seiner beiden Seiten ein Rollenpaar 128, von dem in den Fig. 9 und 10 nur jeweils eine Rolle zu ersehen ist. Diese Rollen, die auf den Schienen 126 abrollen können, sind drehbar auf Achsen 130 gelagert, welche fest mit dem Wagen 122 verbunden sind. Durch diese Rollen- und Schienenanordnungen wird die Kraft, die von den Luftzylindern 118 aufgebracht werden muß, um die Vorschubbewegung des Wagens zu erreichen, weitgehend herabgesetzt, und die Rollen- und Schienenanordnung sorgt zugleich für eine stabile Abstützung der Hebeeinrichtung 116.

Im Regelfall wird der zweite Rost 104 nach Durchführung des Bewegungszyklus wieder in die Ausgangslage gemäß Fig. 9 gebracht, d.h. unterhalb des ersten Rostes 102. Somit wird der Faserballen während der Abtragbewegung der Fräswalze der Ballenabtragmaschine lediglich vom ersten Rost 102 getragen. Im Regelfall wird aufgrund des Gewichtes des Faserballens eine ausreichende Reibungskraft zwischen dem Faserballen und den Stäben 102 des ersten Rostes entstehen, um eine Rückwärtsbewegung des Faserballens aufgrund der während des Ballenabtragens entstehenden, eigentlich mäßigen, rückwärts gerichteten Reaktionskräfte zu verhindern. Sollten aber hier Bedenken bestehen, so können, wie in Fig. 9 gezeigt, besondere Erhebungen 132 auf die Oberflächen der Längsstäbe 108 des ersten Rostes angebracht werden, um den Widerstand gegen eine rückwärtige Bewegung der Faserballen zu erhöhen. In Seitenansicht könnten diese Erhebungen 132 beispielsweise die Form eines Sägezahns aufweisen.

Nachdem die Reaktionskräfte während des Schrägabtragens nicht sehr groß sind, ist es durchaus denkbar, daß die Oberseite des zweiten Rostes in der abgesenkten Lage desselben nicht unbedingt unterhalb der Abstützfläche, d.h. der Oberseite des ersten Rostes liegen muß. Es ist durchaus denkbar, daß diese Flächen in der gleichen Höhe liegen können oder sogar, daß die Oberseite des zweiten Rostes auch in der abgesenkten Stellung etwas oberhalb der Oberseite des ersten Rostes liegen könnte. Man muß nämlich berücksichtigen, daß die Ballen aus weichem Material bestehen, das sich unter dem Gewicht der Ballen etwas verformen wird, so daß, vor allem bei Maßnahmen, welche die Reibung an der Oberfläche der Längsstäbe 102 im Vergleich zu der Reibung auf den Längsstäben 112 erhöhen, durchaus eine solche Anordnung ermöglichen könnte. Aus diesem Grunde wird im Hauptanspruch vorgesehen, daß die Ausgangslage unterhalb oder zumindest in etwa gleich hoch liegen kann wie die Stützfläche des Abstützelements, wobei die Bezeichnung "in etwa gleich hoch" so verstanden werden kann, daß die Oberfläche des zweiten Rostes in der Ausgangslage auch evtl. etwas oberhalb der Oberfläche des ersten Rostes liegen kann. Wesentlich ist, daß bei der Hebebewegung des zweiten Rostes das Gewicht der Faserballen vorwiegend vom zweiten Rost übernommen wird. Auch können die Längsstäbe 104 des zweiten Rostes mit den die Reibung erhöhenden Erhebungen versehen werden, wenn dies zur Sicherstellung der Verschiebebewegung erforderlich erscheint.

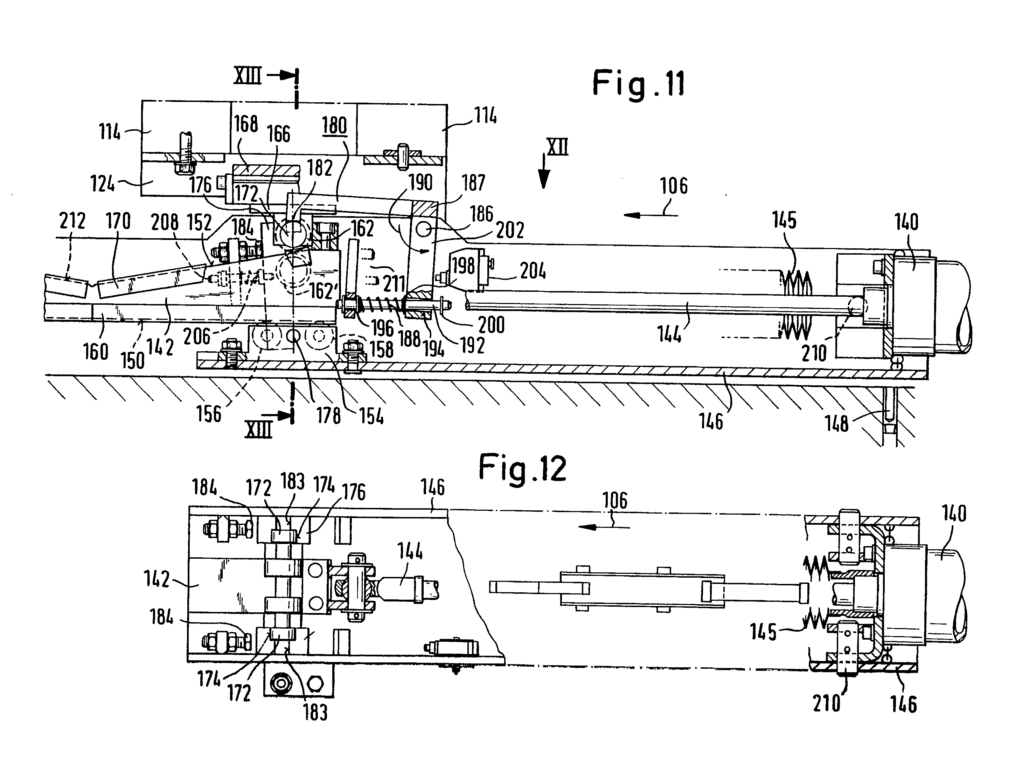

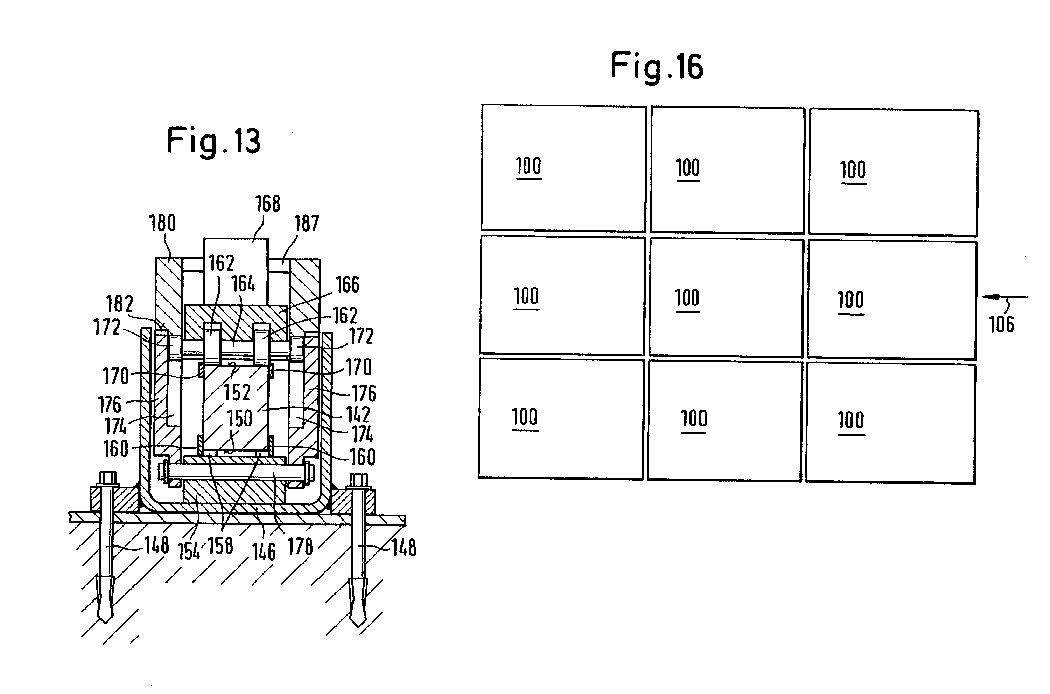

Bei dieser Ausführung werden die Hebebewegungen und die Verschiebebewegungen von zwei getrennten Einrichtungen bewirkt. Es besteht aber auch die Möglichkeit, diese zwei Bewegungen mit einer Einrichtung durchzuführen, die nachfolgend anhand des Ausführungsbeispiels der Fig. 11 bis 13 erläutert wird. Bei diesem Beispiel wird ein in der Verschieberichtung 106 unter der Einwirkung eines Luftzylinders 140 verschiebbarer Keil 142 zur Durchführung der Anhebe- und Verschiebebewegungen benützt. Zu diesem Zweck ist der Keil 142 mit der Kolbenstange 144 des Luftzylinders 140 verbunden. Sowohl der Keil als auch der Luftzylinder und auch der weitere Mechanismus befindet sich in einer U-förmigen Schiene 146, deren Quersteg mittels Spannbolzen 148 am Boden befestigbar ist. Die Querschnittsform dieser U-förmigen Schiene 146 ist insbesondere aus der Querschnittszeichnung gemäß Fig. 13 ersichtlich.

Der Keil 142 hat eine waagerechte Unterseite 150 und eine schräge Oberseite 152. Auf dem Quersteg der U-förmigen Schiene 146 ist ein Abstützglied 154 für den Keil vorgesehen und das Abstützglied 154 weist zwei voneinander in der Verschieberichtung 106 einen Abstand aufweisende Rollenpaare 156 und 158 auf, wobei die zwei hinteren Rollen 158 des hinteren Rollenpaares in der Fig. 13 ersichtlich sind. Aus Fig. 13 sieht man, daß die Rollen jedes Rollenpaares auf der linken und rechten Seite des Keils angeordnet sind. Die Teile 160 sind Flanschteile, welche für eine seitliche Führung des Keils sorgen. Durch das Vorsehen der Rollenpaare 156 und 158 wird für eine zumindest im wesentlichen reibungsfreie Führung des Keils 142 gesorgt, wodurch die vom Luftzylinder 140 aufzubringenden Kräfte herabgesetzt sind.

Oberhalb des Heils 142 befindet sich ein weiteres Rollenpaar 162, welches auf einer Achse 164 drehbar gelagert ist, wobei diese Achse an einer Platte 166 befestigt ist, die wiederum über Zwischenglieder 168 an einem Plattenteil 124 befestigt ist, das entsprechend der bisherigen Ausführungsform der Fig. 6 bis 10 über Querbalken 114 am zweiten Rost (nicht gezeigt) befestigt ist. Neben der schräg verlaufenden Oberfläche 152 des Keils befinden sich weitere Flanschteile 170, welche für eine seitliche Führung der Rollen 162 sorgen. Es ist somit ersichtlich, daß eine Bewegung des Keils 142 in der Verschieberichtung 106 unter der Einwirkung des Luftzylinders 140, aufgrund der schrägen Fläche 152 zu einer Anhebung des Rollenpaares 162 und daher des zweiten Rostes führt. Aus der Fig. 13 ist aber auch ersichtlich, daß die Enden der Achse 164 über die Seitenkanten der Platte 166 hinaus verlängert sind und weitere Rollen 172 tragen, die sich in einer senkrecht stehenden Nut 174 einer Halterung 176 entsprechend der Anhebung bzw. Absenkung des Rollenpaares 162 bewegen können. Die Halterung 176 ist unterhalb des Keils an einer Achse 178 befestigt, welche drehbar innerhalb des Abstützgliedes 154 zwischen den Rollenpaaren 156 und 158 angeordnet ist. Diese Achse 178 liegt in einer waagerechten Ebene senkrecht zur Verschieberichtung 106 und bildet eine Kippachse für die Halterung 176. Eine Kippbewegung der Halterung 176 um die durch die Kippachse definierte geometrische Achse wird während der Anhebebewegung durch ein Rastglied 180 verhindert, dessen Ende 182 in einer in der Halterung 176 ausgebildeten Rastaufnahme 183 sitzt. Am oberen Ende der Hebebewegung kommen jedoch die Rollen 172 in Berührung mit dem unteren Ende des Rasthebels 180 und im Endstadium der Anhebebewegung heben sie das Ende des Rasthebels aus der Rastaufnahme heraus, wodurch die Halterung aufgrund des Gewichtes des zweiten Rostes sowie des Faserballens eine Kippbewegung um die geometrische Achse der Kippachse 178 ausführt, bis sie an einen verstellbaren Anschlag 184 anschlägt. Die Kippbewegung in der erwünschten Richtung wird durch die Schräge der Fläche 152 bewirkt, da das System immer bestrebt ist, sich in einen Zustand geringerer Potentialenergie zu bewegen.

Der Anschlag 184 begrenzt das Ausmaß der Kippbewegung der Halterung 176 und bestimmt hierdurch die Länge des Vorschubschrittes. Obwohl der Anschlag 184 hier als Bolzen dargestellt ist, wobei eine solche Ausführung durchaus in der Praxis nützlich ist und eine Feineinstellung des Vorschubschrittes ermöglicht, kann er auch durch einen automatisch verstellbaren Anschlag ersetzt werden, beispielsweise einen solchen, bei dem ein Elektromotor für eine Drehbewegung des Anschlagbolzens sorgt. Eine derartige Anordnung ermöglicht es dann, die Vorschubschrittlänge von der Maschinensteuerung aus zu wählen und einzustellen.

Die konkrete Anordnung des Rasthebels 180 geht insbesondere aus Fig. 11 hervor. Man sieht, daß der Rasthebel die Form zweier zueinander paralleler rechtwinkliger Arme hat, die im Winkelbereich bei 186 an der Schiene 146 angelenkt und miteinander über einen Querstab verbunden sind. Eine Rückstellfeder 188 ist bestrebt, den Rasthebel wieder in die Rastaufnahme 183 einzurasten, d.h. die Rückstellfeder 188 übt ein Drehmoment entgegen dem Uhrzeigersinn in Pfeilrichtung 190 auf den Rasthebel aus. Die Rückstellfeder ist in diesem Beispiel als Schraubendruckfeder ausgebildet und umfaßt eine Führungsstange 192, welche mit Spiel durch eine Führungsöffnung 194 am unteren Ende des Rasthebels 180 führt. Dabei erstreckt sich die Schraubendruckfeder 188 zwischen zwei scheibenartigen Widerlagern 196, 198, von denen wenigstens das Widerlager 198 verschiebbar ist, und die Führungsstange 192 ist an ihrem vorderen Ende an der Seitenwand der U-förmigen Schiene 146 befestigt. An ihrem freien Ende hinter dem Rasthebel 180 befindet sich auf der Führungsstange ein scheibenartiger Anschlag 200, welcher die Schwenkbewegung des Rasthebels 180 begrenzt.

Hinter dem senkrechten Schenkel 202 des Rasthebels befindet sich ein Schalter 204, dessen Schaltzustand der Maschinensteuerung Auskunft darüber liefert, ob der Rasthebel in der Halterung eingerastet ist.

Unterhalb des verstellbaren Anschlages 184 zur Begrenzung der Kippbewegung der Halterung befindet sich eine weitere Schraubendruckfeder 206, welche auf einem Stift 208 geführt ist und deren Aufgabe darin besteht, nach Absenkung des zweiten Rostes durch Bewegung des Keils 142 unter der Einwirkung des Luftzylinders 140 in einer der Verschieberichtung 106 entgegengesetzten Richtung die Halterung 176 um die geometrische Achse der Kippachse 178 in die Ausgangslage zurückzustellen, so daß der Rasthebel wieder einrastet. Ein Bewegungszyklus der Ausführungen gemäß Fig. 11 bis 13 sieht daher folgendermaßen aus. Am Anfang befindet sich der Keil 142 weit nach rechts verschoben, so daß sich das Rollenpaar 162 am unteren Ende der Keilfläche 152 befindet, d.h. in der gestrichelten Lage 162' der Fig. 11. Mit anderen Worten ist der Luftzylinder 150, welcher bei 210 an der Schiene 146 befestigt ist, in der eingezogenen Stellung. Die Kipphalterung 176 befindet sich in der senkrechten Lage und das einrastende Ende des Rasthebels 180 befindet sich in der Rastaufnahme 182. Durch Ausfahren des Luftzylinders 140 wird dessen Kolbenstange 144, welche durch die Manschette 145 gegen Staub und Faserflug geschützt ist, ausgefahren und schiebt den Keil 142 in der Verschieberichtung 106 nach vorne. Die Rollen des Rollenpaares 162 rollen nunmehr entlang der Keilfläche 152 und werden hierdurch aus der Ausgangslage 162' in die gehobene Lage der Fig. 11 gehoben. Während dieser Hebebewegung wird auch der zweite Rost angehoben, so daß das Gewicht des Faserballens nunmehr auf diesem Rost ruht. Am Ende der Hebebewegung wird der Rasthebel 180 im Uhrzeigersinn durch Berührung des Rollenpaares 162 mit dem einrastenden Ende des Rasthebels gedreht, wodurch der Rasthebel aus der Rastaufnahme gehoben wird. Durch den Schalter 204 wird diese Freigabe des Rasthebels der Maschinensteuerung gemeldet und die weitere Beaufschlagung des Luftzylinders 140 gestoppt. Aufgrund der Freigabe der Kipphalterung durch den Rasthebel 180 kippt die Halterung 176 unter der Einwirkung des Gewichtes des zweiten Rostes und der Ballen, aufgrund der Neigung der Flächen 152 nach vorne und bewegt den zweiten Rost nach vorne um einen Betrag, welcher durch die Einstellung des Anschlages 184 bestimmt ist. Sobald die Kipphalterung am Anschlag 184 anstößt, wird aufgrund eines nicht gezeigten Schalters ein weiteres Signal an die Maschinensteuerung geschickt, wodurch die Einziehbewegung des Luftzylinders 140 befohlen wird. Anstatt einen zweiten Schalter zu verwenden, kann die Einziehbewegung des Luftzylinders zeitverzögert nach der Betätigung des Schalters 204 erfolgen. Bei der Einziehbewegung des Luftzylinders 140 wird der Keil 142 in Fig. 11 nach rechts gezogen und das Rollenpaar 162 rollt der Keilfläche 152 entlang nach unten, wodurch gleichzeitig eine Absenkbewegung des zweiten Rostes stattfindet. Sobald das Gewicht des Faserballens vom ersten Rost übernommen wird, ist die Schraubendruckfeder 206 in der Lage, die Kipphalterung 176 wieder in die senkrechte Stellung zu kippen, und es rastet das Ende des Rasthebels 180 wieder in die Rastaufnahme 182 ein. Die entsprechende Drehbewegung des Rasthebels 180 wird vom Schalter 204 ermittelt und die weitere Betätigung des Luftzylinders 140 wird gestoppt.

Wie aus der linken Seite der Fig. 11 ersichtlich, ist der Keil 142 als Doppelkeil ausgebildet und hat eine zweite Keilfläche 212, welche der Keilfläche 152 entgegengesetzt geneigt ist und zwar so, daß diese beiden Flächen zusammen eine V-förmige Fläche bilden. Durch weiteres Einziehen des Luftzylinders 140 kann das Rollenpaar 162 daher aus der Lage 162' wieder in die angehobene Lage gebracht werden, diesmal auf der Keilfläche 212. Hierdurch wird der zweite Rost wieder angehoben. In der angehobenen Stellung wird der Rasthebel 180 wiederum aus der Rastaufnahme 182 gehoben und die Halterung 176 kippt nunmehr aufgrund der Neigung der Keilfläche 212 im Uhrzeigersinn nach hinten. Durch Ausfahren des Luftzylinders 140 wird der Keil 142 nunmehr zurückgestellt, so daß eine Absenkbewegung des zweiten Rostes stattfindet und der Rasthebel 180 wieder einrastet. Aus dieser Beschreibung sieht man, daß die gezeigte Anordnung auch einen Rücktransport der Faserballen ermöglicht.

Für die Bewegung entlang der Keilfläche 212 ist es notwendig, weitere Anschläge 184 sowie weitere Rückstellfedern auf der in Fig. 11 rechten Seite der Kipphalterung 176 vorzusehen, was dort schematisch bei 212 angedeutet ist.

Es ist möglich, nur einen Anschlag 184 auf einer Seite der Schiene 146 anzubringen, doch bevorzugt man die Anbringung von zwei solchen Anschlägen, wie aus Fig. 12 ersichtlich.

Auch der Rasthebel 180 kann, falls erwünscht, nur auf einer Seite der Schiene 146 angeordnet werden, auch hier ist es aber bevorzugt, den Rasthebel 180 als doppelten Rasthebel auszubilden, so daß schließlich zwei Rastenden auf beiden Seiten der Schiene in die zwei in Fig. l2 gezeigten Rastaufnahmen 182 eingreifen. Die zwei Arme des Rasthebels 180 sind miteinander über Querverbindungen (nicht gezeigt) verbunden und damit miteinander synchronisiert.

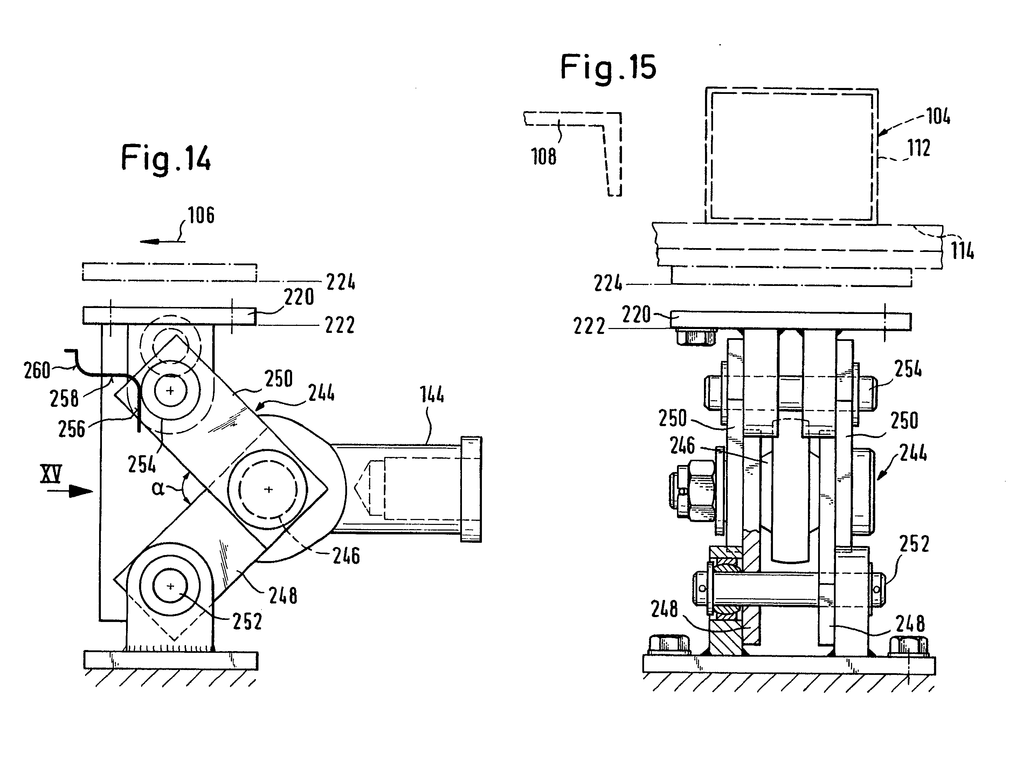

Eine dritte Ausführungsform der Erfindung ist den Fig. 14 und 15 zu entnehmen. Der Darstellung halber ist in Fig. 14 weder der erste Rost noch der zweite Rost gezeigt. Es versteht sich aber, daß die Platte 220 von einer abgesenkten Lage 222 in eine angehobene Lage 224 gehoben wird und daß diese Platte 220 beispielsweise anstelle der Platte 124 der Ausführung gemäß Fig. 6 bis 10 gedacht werden kann, was im übrigen schematisch durch die Darstellung der Fig. 15 gezeigt ist.

Für diese Anhebebewegung besteht die Hebeeinrichtung der Ausführung nach Fig. 14 und 15 aus einem Scherengelenk 244 mit zwei über ein gemeinsames Gelenk 246 aneinander angelenkten Schenkeln 248, 250. Der erste Schenkel 248 ist an seinem dem gemeinsamen Gelenk 246 entgegengesetzten unteren Ende an einem bezüglich des Abstützelementes fest angeordneten Anlenkpunkt 252 angelenkt. Der zweite Schenkel 250 ist an seinem dem gemeinsamen Gelenk entgegengesetzten oberen Ende an einem dem Träger bzw. dem zweiten Rost zugeordneten Anlenkpunkt 254 angelenkt. Eine Betätigungseinrichtung, beispielsweise die Kolbenstange eines Luftzylinders, greift an dem gemeinsamen Gelenk 246 an und bewirkt hierdurch eine Änderung des durch die beiden Schenkel 248 und 250 gebildeten Winkels α und führt somit zu einer Hebe-Absenkbewegung des Trägers bzw. des zweiten Rostes durch Verschiebung des gemeinsamen Gelenks.

Das Scherengelenk kann auch als Kniehebelgelenk ausgebildet werden, so daß in der angehobenen Stellung die beiden Schenkel 250, 248 miteinander ausgerichtet sind, wobei der Winkel α 180° oder etwas mehr beträgt und ein Anschlag (nicht gezeigt) verhindert, daß der Winkel α noch größer wird.

Die Verschiebebewegung kann bei dieser Ausführung auf verschiedene Art und Weise bewirkt werden. Beispielsweise kann das Gelenk 254 durch eine Führung 256 so geführt werden, daß nach Beendigung der nach oben gerichteten Bewegung unter der Einwirkung der Kräfte von der Betätigungseinrichtung das Gelenk 254 entlang des waagerechten Teils 258 der Führung 256 rollt, bis es an dem Anschlagbereich 260 anstößt, wodurch die Vorschubbewegung beendet ist. Durch Anstoßen des Gelenks 254 am Anschlag 260 wird in der Betätigungseinrichtung eine Druckerhöhung registriert, welche zur Abschaltung der Ausfahrbewegung der Betätigungseinrichtung benutzt werden kann. Die genaue Auslegung der Hebeeinrichtung und der Scherengelenkanordnung geht aus der Fig. 15 hervor. Insbesondere sieht man, daß die Schenkel 250, 248 aus Gründen der Symmetrie als Doppelschenkel ausgebildet sind und daß das gemeinsame Gelenk 246 zwischen den Doppelschenkeln sitzt.

Schließlich zeigt die Fig. 16 in der schematischen Darstellung neun erfindungsgemäße Transportvorrichtungen 100, welche in drei Reihen nebeneinander angeordnet sind, so daß auch drei Transportvorrichtungen hintereinander zu liegen kommen. Dieses Beispiel zeigt, daß die Transportvorrichtung gemäß vorliegender Erfindung modulartig mit gleichartigen Transportvorrichtungen aneinandergereiht werden kann, so daß die Faserballen in der Vorschubrichtung von der einen Transportvorrichtung zur nächsten weiterverschoben werden können.

Die Abmessungen der Transportvorrichtungen können im Prinzip beliebig gewählt werden, es ist jedoch sachdienlich, wenn jede Transportvorrichtung eine Breite entsprechend der Breite von zwei Faserballen und eine Länge entsprechend der Länge von ebenfalls zwei Faserballen aufweist. Somit wäre es möglich, mit der Anordnung gemäß Fig. 16 insgesamt sechs Ballenreihen aufzustellen, wobei jede Reihe aus sechs Ballen besteht. Die Transportvorrichtungen können aber auch so ausgebildet sein, daß sie eine Breite haben, welche der Breite eines einzigen Faserballen entspricht.

Bei einer praktischen Ausführung kann die Schrittlänge im Prinzip beliebig gewählt werden, jedoch sind Schrittlängen unter 1 mm und oberhalb von 50 mm nur in Ausnahmefällen erforderlich. Bei der schrägen Ballenabtragung entspricht eine Vorschubbewegung von 1 mm einer Abtragtiefe von etwa 0.3 mm, je nachdem, welcher konkrete Winkel für die Schräglage der Fräswalze gewählt worden ist. Da die normale Abtragtiefe beispielsweise zwischen 2 und 5 mm liegt, sind dann mehrere Vorschubschritte der Transportvorrichtung erforderlich, um den Faserballen zwischen einzelnen Abtragbewegungen der Schrägwalze vorzuschieben. Mit kleineren Schrittlängen hat man auch die Möglichkeit, die Abtragtiefe bei einzelnen Ballenreihen unterschiedlich zu wählen, um hierdurch eine Dosierung der von den einzelnen Ballenreihen abgetragenen Fasermengen zu erreichen.

## Patentansprüche

1. Transportvorrichtung (100) zur schrittweisen Verschiebung von Faserballen, insbesondere in Richtung einer vorzugsweise geneigt angeordneten und quer zur Verschieberichtung (106) bewegbaren Fräswalze (1) einer Ballenabtragmaschine, dadurch gekennzeichnet, daß die Transporteinrichtung aus mindestens einem der Abstützung des Faserballens dienenden, stationären Abstützelement (102) sowie mindestens einer Verschiebeeinrichtung (104, 116, 118; 104, 192, 140; 204, 244, 144, 256) besteht, und daß die Verschiebeeinrichtung zum Ausführen eines sich wiederholenden Bewegungszyklus von einer Ausgangslage weg und in diese zurück ausgelegt ist, wobei die Ausgangslage tiefer oder zumindest in etwa gleich hoch liegt wie die Abstützfläche des Abstützelements (102) und der Bewegungszyklus einen ersten nach oben und nach vorne gerichteten Abschnitt und einen zweiten nach unten und nach hinten gerichteten Abschnitt aufweist.

2. Transportvorrichtung nach Anspruch 1, dadurch gekennzeichnet, daß zum Rücktransport des Ballens (10) der Bewegungszyklus umkehrbar ist.

3. Transportvorrichtung nach Anspruch 1 oder 2, dadurch gekennzeichnet, daß eine Mehrzahl von Abstützelementen (108) vorgesehen ist, welche parallel zueinander mit Abstand voneinander angeordnet sind und einen Rost bilden.

**4.** Transportvorrichtung nach einem der Ansprüche 1, 2 oder 3, dadurch gekennzeichnet, daß die Verschiebeeinrichtung einen Träger (104) aufweist, welcher die Faserballen (10) wenigstens während eines Teils des ersten Abschnittes trägt.

**5.** Transportvorrichtung nach Anspruch 3, dadurch gekennzeichnet, daß der Träger (104) aus einem zweiten Rost besteht, dessen Stäbe (112) zwischen den Abstützelementen (108) des ersten Rostes angeordnet sind.

**6.** Transportvorrichtung nach einem der Ansprüche 4 oder 5, dadurch gekennzeichnet, daß die Verschiebeeinrichtung mindestens eine Hebeeinrichtung (116; 142; 244), besser zwei oder mehrere synchronisierte Hebeeinrichtungen umfaßt, welche zum Anheben und Absenken des Trägers (104) bzw. des zweiten Rostes dient bzw. dienen.

**7.** Transportvorrichtung nach Anspruch 6, dadurch gekennzeichnet, daß die Verschiebeeinrichtung einen von der Hebeeinrichtung bzw. den Hebeeinrichtungen (116) unabhängig arbeitenden Verschiebemechanismus (118) umfaßt.

**8.** Transportvorrichtung nach Anspruch 6 oder 7, dadurch gekennzeichnet, daß die bzw. jede Hebeeinrichtung (116) aus einem aufblasbaren Balg (120) besteht.

**9.** Transportvorrichtung nach Anspruch 8, dadurch gekennzeichnet, daß der aufblasbare Balg (120) auf einem rollbar angeordneten Wagen (122) angeordnet ist und den zweiten Rost (104) trägt, und daß der Verschiebemechanismus entweder an dem Wagen (122) oder an dem zweiten Rost (108) angreift.

**10.** Transportvorrichtung nach Anspruch 9, dadurch gekennzeichnet, daß der Verschiebemechanismus ein ausfahrbarer und rückziehbarer Luftzylinder (140) ist oder ein antreibbare, vorzugsweise elektrisch antreibbare Gewindespindel und eine Kugelmutter umfaßt, wobei der Verschiebemechanismus vorzugsweise über ein Untersetzungsgetriebe an dem Wagen bzw. an dem zweiten Rost (104) angreift.

**11.** Transportvorrichtung nach Anspruch 9 oder 10, dadurch gekennzeichnet, daß der Wagen Rollen (128) aufweist, welche auf sich in der Verschiebeeinrichtung erstreckenden Schienen (126) laufen.

**12.** Transportvorrichtung nach einem der vorhergehenden Ansprüche 1 bis 6, dadurch gekennzeichnet, daß die bzw. jede Verschiebeeinrichtung aus einer Hebeeinrichtung (142; 244) mit integriertem Verschiebemechanismus (140, 176, 178; 256, 144) besteht.

**13.** Transportvorrichtung nach Anspruch 12, dadurch gekennzeichnet, daß die bzw. jede Verschiebeeinrichtung aus einem verschiebbaren Keil (142) besteht.

**14.** Transportvorrichtung nach Anspruch 13, dadurch gekennzeichnet, daß der Keil (142) mit einer in einer Halterung (176) in senkrechter Richtung geführten Rolle (162) zusammenarbeitet, welche einen die Ballen anhebenden Träger (108) bzw. den zweiten Rost anhebt, daß die Halterung (176) um eine zumindest im wesentlichen waagerechte und quer zur Verschieberichtung (106) stehende Achse (178) kippbar angeordnet ist, und daß eine erst am oberen Ende der Hebebewegung lösbare Verriegelungd (180) die Halterung (176) zur Ausführung einer den Träger bzw. den zweiten Rost in Verschieberichtung bewegende Kippbewegung freigibt.

**15.** Transportvorrichtung nach Anspruch 13 oder 14, dadurch gekennzeichnet, daß der Keil (142) als Doppelkeil mit entgegengesetzt geneigten, vorzugsweise zueinander V-förmig geneigten Keilflächen (152, 212) ausgebildet ist, wodurch die eine Keilfläche (152) für eine Verschiebung in die Verschieberichtung (106) und die andere Keilfläche (212) für eine Verschiebung in die entgegengesetzte Richtung sorgt.

**16.** Transportvorrichtung nach Anspruch 14 oder 15, dadurch gekennzeichnet, daß ein Anschlag (184) oder mehrere Anschläge (184) vorgesehen ist bzw. sind, um die Kippbewegung der Halterung (178) zu begrenzen.

**17.** Transportvorrichtung nach Anspruch 16, dadurch gekennzeichnet, daß der Anschlag (184) bzw. wenigstens ein Anschlag (184) verstellbar ist.

**18.** Transportvorrichtung nach einem der Ansprüche 14 bis 17, dadurch gekennzeichnet, daß eine Rückstelleinrichtung (206) vorgesehen ist, welche die Halterung (176) mit dem Träger (104) bzw. mit dem zweiten Rost nach einer erfolgten Kippbewegung und nach Absenkung des Trägers bzw. des Rostes in die verriegelte Stellung zurücksetzt.

19. Transportvorrichtung nach Anspruch 18, dadurch gekennzeichnet, daß die Rückstelleinrichtung aus einer Feder (206) oder mehreren Federn besteht.

20. Transportvorrichtung nach einem der Ansprüche 14 bis 19, dadurch gekennzeichnet, daß die Rolle (162) eine Achse (164) aufweist, welche am Träger (104) bzw. am zweiten Rost angebracht ist bzw. an diesem angreift.

21. Transportvorrichtung nach einem der vorhergehenden Ansprüche 14 bis 20, dadurch gekennzeichnet, daß die Verriegelung (180) durch die senkrechte nach oben gerichtete Bewegung von z.B. der Rolle (162) lösbar ist.

22. Transportvorrichtung nach Anspruch 21, dadurch gekennzeichnet, daß die Verriegelung durch einen drehbaren, unter Vorspannung, vorzugsweise Federvorspannung stehenden Rasthebel (180) gebildet ist, dessen die Verriegelung bewirkendes Ende in eine Rastaufnahme (182) des oberen Endes der Halterung (176) eingreift.

23. Transportvorrichtung nach einem der Ansprüche 14 bis 22, dadurch gekennzeichnet, daß eine das Lösen und/oder das Wiedereinrasten der Verriegelung ermittelnde Einrichtung vorgesehen ist, beispielsweise in Form eines Schalters (204).

24. Transportvorrichtung nach einem der Ansprüche 14 bis 23, dadurch gekennzeichnet, daß die Rolle aus zwei einzelnen Rollen besteht, die mit Abstand voneinander auf einer Achse (164) angeordnet sind, wobei die Rollen (162) auf zugeordneten Laufflächenbereichen (152; 212) des Keils (142) abrollen und daß die Enden der Achsen sich durch die Rollen (162) hindurch erstrecken und in Führungen (174) der Halterung (176) abrollenden weiteren Rollen (172) geführt sind, wobei die Achse zwischen jeder Rolle (162) und der benachbarten weiteren Rolle (172) und/oder zwischen den erstgenannten Rollen (162) in einem Teil (166) des Trägers (104) bzw. zweiten Rostes befestigt ist.

25. Transportvorrichtung nach einem der vorhergehenden Ansprüche 13 bis 24, dadurch gekennzeichnet, daß Abstützrollen (156, 158) unterhalb des Keils (142) angeordnet sind und an weiteren Laufflächen desselben abrollen.

26. Transportvorrichtung nach einem der vorhergehenden Ansprüche 13 bis 25, dadurch gekennzeichnet, daß die Rolle (162) bzw. die Rollen (162) und/oder die weiteren Rollen (172) und/oder die Abstützrollen (156, 158) durch Wälzlager gebildet sind.

27. Transportvorrichtung nach einem der vorhergehenden Ansprüche 13 bis 25, dadurch gekennzeichnet, daß zur Verstellung des Keils (142) ein Luftzylinder (140) oder eine mit einer Kugelmutter zusammenwirkende Gewindespindel vorgesehen ist.

28. Transportvorrichtung nach einem der Ansprüche 1 bis 6, dadurch gekennzeichnet, daß die bzw. jede Hebeeinrichtung aus einem Scherengelenk (244) mit zwei über ein gemeinsames Gelenk (246) aneinander angelenkten Schenkeln (248, 250) besteht, daß der erste Schenkel (248) an seinem dem gemeinsamen Gelenk (246) entgegengesetzten Ende an einem bezüglich des Abstützelementes fest angeordneten Anlenkpunkt (252) angelenkt ist, daß der zweite Schenkel (250) an seinem dem gemeinsamen Gelenk (246) entgegengesetzten Ende an einem dem Träger (104) bzw. dem zweiten Rost zugeordneten Anlenkpunkt (254) angelenkt ist, und daß eine Betätigungseinrichtung (144) vorgesehen ist, welche an dem gemeinsamen Gelenk (246) angreift und hierdurch eine Hebe- bzw. Absenkbewegung des Trägers (104) bzw. des Rostes durch Verschiebung des gemeinsamen Gelenkes bewirkt.

29. Transportvorrichtung nach Anspruch 28, dadurch gekennzeichnet, daß das Scherengelenk (244) als Kniehebelgelenk ausgebildet ist.

30. Transportvorrichtung nach einem der Ansprüche 28 oder 29, dadurch gekennzeichnet, daß eine Führung (256) vorgesehen ist, welche den Träger (104) bzw. den zweiten Rost oder dessen Anlenkpunkt (254) am zweiten Schenkel des Scherengelenkes wenigstens im oberen Bereich der Hebebewegung unter der Einwirkung der auf das Scherengelenk einwirkenden Kräfte bzw. der Schwerkraft führt und eine Bewegung des Trägers bzw. des Rostes in der Verschieberichtung (106) bewirkt.

31. Transportvorrichtung nach einem der vorhergehenden Ansprüche, dadurch gekennzeichnet, daß die Länge des ersten Bewegungsabschnittes in der Verschieberichtung von der Ausgangslage weg im Bereich zwischen 1 mm und 50 mm liegt.

32. Transportvorrichtung nach einem der vorhergehenden Ansprüche, dadurch gekennzeichnet, daß sie in Draufsicht von rechteckiger Gestalt ist und daß mehrere gleichartige Transportvorrichtungen in Reihen neben- und/oder hintereinander zur Bildung der Ballenzuführeinrichtung einer Ballenabtragmaschine angeordnet sind (Fig. 16).

33. Transportvorrichtung nach Anspruch 32, dadurch gekennzeichnet, daß nur die erste Transportvorrichtung von jeder Reihe zu einem Rücktransport des auf dieser stehenden Ballens ausgelegt ist.

Fig.1

Fig.2

Fig.4

Fig.5

Fig.3

# Fig.6

# Fig.8

# Fig.7

EP 0 439 831 A1

Fig.9

Fig.10

Fig.11

Fig.12

EP 0 439 831 A1

## Fig.13

## Fig.16

EP 0 439 831 A1

# Fig.14

# Fig.15

EP 0 439 831 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | US-A-4 497 085   (DOORN VAN,D.W. ET AL)<br>* Spalte 4-6; Figuren 11-17, 20 *<br>– – – | 1,3,7,9,<br>12,23,32 | D 01 G<br>7/08<br>D 01 G 7/14<br>B 65 G 25/02 |
| Y,A | US-A-4 071 137   (FINK,R.A.)<br>* das ganze Dokument *<br>– – – | 1,3,6,7,8,<br>10,23 | |
| Y,A | GB-A-2 023 078   (FIESER,A.H. ET AL)<br>* Seite 3-5; Figuren 1, 3, 10, 13, 17 *<br>– – – | 1,3,6,7,<br>10,27 | |
| A | DE-A-2 027 965   (FÖRDER AG)<br>– – – | | |
| A | US-A-3 537 143   (MERCK,J.K.)<br>– – – – – | | |

| RECHERCHIERTE SACHGEBIETE (Int. Cl.5) |
|---|
| D 01 G<br>B 65 G |

Der vorliegende Recherchenbericht wurde für alle Patentansprüche erstellt

| Recherchenort | Abschlußdatum der Recherche | Prüfer |
|---|---|---|
| Den Haag | 06 Mai 91 | MUNZER E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-----------------------------------------------------------------
& : Mitglied der gleichen Patentfamilie, übereinstimmendes Dokument